# EUROPÄISCHE PATENTANMELDUNG

(11) **EP 1 464 947 A2**
(43) Veröffentlichungstag der Anmeldung: **06.10.2004**
(21) Anmeldenummer: 04002862.3
(22) Anmeldetag: 10.02.2004
(51) Int. Cl.: G01N 13/00, G01N 1/22, G01M 17/00

(54) **Verfahren und Vorrichtung zur Bestimmung stofflicher Emissionen von Prüflingen**

(30) Priorität: 04.04.2003 DE 10315391
(71) Anmelder: Federal-Mogul Sealing Systems GmbH, 57562 Herdorf (DE)
(72) Erfinder: Windgassen, Walter, 51399 Burscheid (DE)

(57) **Zusammenfassung**

Verfahren zur Bestimmung stofflicher Emissionen mindestens eines in einer Kammer angeordneten Prüflings, wobei der Prüfling einem Medium ausgesetzt wird und emittierende Stoffe des Prüflings durch die sich ändernde Zusammensetzung des Mediums bestimmt werden, wobei der Prüfling dergestalt in der Kammer positioniert wird, dass zwei gegeneinander abgedichtete Räume mit separaten Medieneinlass- und - auslassöffnungen gebildet werden, dass der erste Raum von einem durchdringungsfähigen Medium mit einer Zusammensetzung, einem Druck sowie einer Temperatur beaufschlagt wird, dass der zweite Raum von einem neutralen Trägermedium mit einer Zusammensetzung, einem Druck sowie einer Temperatur beaufschlagt wird, und dass das emittierte Stoffe des Prüflings bzw. des Mediums beinhaltende Trägermedium einer Analysemesseinrichtung zugeführt wird.

## Beschreibung

Die Erfindung betrifft ein Verfahren zur Bestimmung stofflicher Emissionen mindestens eines in einer Kammer (SHED) angeordneten Prüflings, dessen emittierende Stoffe bestimmt werden.

Der DE-C 41 27 435 ist eine Kammer (SHED) zur Messung von Verdampfungsemissionen von in einer geschlossenen Kammer angeordneten Kraftfahrzeugen und/oder Kraftfahrzeugteilen zu entnehmen, wobei bei der Messung ein Volumenausgleich der Kammer zur Kompensation von während der Messung auftretenden Kammerinnentemperaturschwankungen und/oder Außendruckschwankungen erfolgt. Unter einem SHED (Sealed Housing for Evaporative Determination) versteht die Fachwelt eine abgedichtete Kammer zur Bestimmung von emittierenden Substanzen aus Bauteilen in die Umwelt. Zum Volumenausgleich ist die Deckenwandung oder ein Abschnitt dieser selbstregulierend oder angetrieben druckabhängig verstellbar und gegenüber der Kammer über eine Flüssigkeitsdichtung abgedichtet. Alternativ kann in der Kammer ein flexibles Ballonelement angeordnet sein, das über von einer gemeinsamen Leitung ausgehende und parallel geschaltete Gasmengenmesser mit dem Außendruck in Verbindung steht.

In der US-A 5,592,372 wird eine weitere als SHED ausgebildete Kammer abgehandelt, in welcher stoffliche Emissionen von Motorfahrzeugen bestimmt werden können. Es ist eine luftdicht abgeschlossene Kammer zur Aufnahme des Motorfahrzeuges bzw. einer Brennkraftmaschine vorgesehen, innerhalb derer eine entsprechende Umgebungsatmosphäre gegeben ist. Es sind Kontrollelemente zur Überwachung der Temperatur der Umgebungsluft vorgesehen. Ferner sind Entnahmemittel zum Abziehen einer definierten Luftmenge aus dem Kammerinnenraum vorgesehen, wobei die abgezogenen Luftmengenanteile einer Emissionsmessung unterzogen werden. Der abgezogene Luftmengenanteil wird durch entsprechende Luftzufuhr ersetzt.
Mit den beiden genannten Einrichtungen können Bauteile größeren Umfangs überprüft werden, wobei nicht zwangsläufig auch eine emissionsmäßige Zuordnung zu Einzelbauteilen der Prüfobjekte vorgenommen werden kann.
Im Zusammenhang mit Maßnahmen zur Luftreinerhaltung werden in vielen Ländern der Erde Emissionsgrenzwerte von Kohlenwasserstoffen, die von Fahrzeugen ausgehen, stufenweise verschärft. Dies führt dazu, dass auch Hersteller von Einzelbauteilen bezüglich Emissionen ihrer Bauteile stärker in die einzuhaltenden Emissionsgrenzwerte einbezogen werden.

Der Erfindung liegt die Aufgabe zugrunde, ein alternatives Messverfahren sowie eine ebenfalls alternative Messvorrichtung bereitzustellen, die auf einfache Weise eine Zuordnung stofflicher Emissionen zu einzelnen Bauteilen bzw. Bauteilgruppen bei verbesserter Genauigkeit ermöglicht.
Diese Aufgabe wird verfahrensgemäß dadurch gelöst, dass der Prüfling dergestalt in der Kammer positioniert wird, dass zwei gegeneinander abgedichtete Räume mit separaten Medienein- und auslassöffnungen gebildet werden, dass der erste Raum von einem durchdringungsfähigen Medium mit einer Zusammensetzung, einem Druck sowie einer Temperatur beaufschlagt wird, dass der zweite Raum von einem neutralen Trägermedium mit einer Zusammensetzung, einem Druck sowie einer Temperatur beaufschlagt wird, und dass das Trägermedium inkl. emittierter Stoffe, die aus Eigensubstanzen des Prüflings resultieren bzw. aus dem durchdringungsfähigen Medium, einer Analysemesseinrichtung zugeführt wird.

Vorteilhafte Weiterbildungen des Erfindungsgegenstandes sind den zugehörigen verfahrensgemäßen Unteransprüchen zu entnehmen.

Die Aufgabe wird gegenständlich auch dadurch gelöst, dass der Prüfling dergestalt in der Kammer angeordnet ist, dass zwei gegeneinander abgedichtete Räume entstehen, die jeweils separate Medienein- und auslassöffnungen aufweisen, dass der erste Raum von einem durchdringungsfähigen Medium mit einer Zusammensetzung, einem Druck sowie einer Temperatur beaufschlagbar ist, dass der zweite Raum von einem neutralen Trägermedium mit einer Zusammensetzung, einem Druck sowie einer Temperatur beaufschlagbar ist, und dass das Trägermedium inkl. emittierender Stoffe aus der Eigensubstanz des Prüflings bzw. aus dem durchdringungsfähigen Medium, der Analysemesseinrichtung zuführbar ist.

Vorteilhafte Weiterbildungen des Erfindungsgegenstandes sind den gegenständlichen Unteransprüchen zu entnehmen.

Gegenstand der Erfindung sind Prüfeinrichtungen und Prüfverfahren zur Bestimmung stofflicher Emissionen von Materialien und Bauteilen in Abhängigkeit von simulierten Betriebszuständen. Bei den stofflichen Emissionen kann es sich sowohl um Eigenemissionen des Prüflings handeln (Desorbtion flüchtiger Substanzen) als auch um den Durchlass von kontaktierenden flüssigen, gasförmigen oder dampfartigen Medien (Permeation). Abweichend zum Stand der Technik ist beim Erfindungsgegenstand die Möglichkeit einer stetigen Auffrischung des Kontaktmediums (gleichbleibende Eigenschaften) sowie eine vorteilhafterweise, jedoch nicht zwingend notwendige, kontinuierliche Analysemessung anzusehen.
In Abhängigkeit von den zu untersuchenden Prüflingen sind auch unterschiedliche Positioniermöglichkeiten im Bereich der Kammer gegeben.
Ist der Prüfling eine Platte, kann selbige im Umfangsbereich definiert zwischen zwei flanschartig ausgebildeten Spannelementen eingebracht werden, wobei eine vorgebbare Einbaukraft bzw. Einbauhöhe simuliert werden kann. Hier wird der erste Raum gebildet, durch welchen ein durchdringungsfähiges flüssiges, gasförmiges oder dampfartiges Medium über eine Einlassöffnung eingebracht wird. Über eine Auslassöffnung wird sichergestellt, dass das Medium den ersten Raum in gleicher Weise wieder verlassen kann. Ist das Medium durchdringungsfähig, so wird eine Emission in den zweiten Raum hinein erfolgen.
Im Bereich des anderen Raumes strömt ein neutrales Trägermedium, dass vorteilhafterweise kontinuierlich zu Messinstrumenten (Volumenstrommesser, Stoffanalysatoren oder dergleichen) geleitet wird. Die aus dem Prüfling emittierenden Stoffe gelangen somit in das neutrale Trägermedium, so dass im Bereich der Messvorrichtung entsprechende Bestimmungen (Art und/oder Menge) der emittierten Stoffe herbeigeführt werden können.
Mit dem erfindungsgemäßen Verfahren sowie der erfindungsgemäßen Vorrichtung werden folgende Vorteile erzielt:
Einspannung des Prüflings bei definierter Einbaukraft bzw. Einbauhöhe;
Minimierung von Randeinflüssen am Prüfling (Kompressionsgradienten, ausgehend vom Einspannrand in Zentrumsrichtung) mittels einer partiellen Sperr-Beschichtung bzw. Aufkleben einer permeationsdichten Sperrschicht;

Begrenzung einer Ausbeulung der Prüflinge (Temperaturdruck- und/oder Quelleffekte) durch Anschläge innerhalb des ersten Raumes. Erforderlich ist eine ausreichende Strukturierung der Anschlagflächen, so dass der Medienkontakt der Prüfoberfläche und der Medienfluss nur minimal eingeschränkt werden.

Der jeweiligen Prüfung kann in unterschiedlichster Form durch das jeweilige zum Einsatz gelangende Medium beaufschlagt werden. Im einzelnen sind dies:
Beaufschlagung des Prüflings mit einem festem Ausgangsvolumen eines gasförmigen durchdringungsfähigen Mediums (eventuell in Verbindung mit einem vorangehenden Spülvorgang);
Beaufschlagung des Prüflings mit einem festen Ausgangsvolumen eines flüssigen durchdringungsfähigen Mediums bei Einstellung eines definierten Flüssigkeitspegels;
Beaufschlagung des Prüflings über eine stetige dosierte Zufuhr eines gasförmigen durchdringungsfähigen Mediums (inklusive stetiger Abströmung);

Beaufschlagung des Prüflings über eine stetige dosierte Zufuhr eines flüssigen durchdringungsfähigen Mediums bei Einstellung eines definierten Flüssigkeitspegels derart, dass der Prüfling mit der Flüssigkeit direkt oder mit dessen Dampf oberhalb des Flüssigkeitspegels kontaktiert wird (inklusive stetiger Abfuhr des Mediums).

Weitere mit dem Erfindungsgegenstand verbundene Vorteile werden wie folgt angegeben:

Transport des emittierten Mediums per neutralem Trägermedium (z.B. einem Gas, wie Helium oder Stickstoff, oder alternativ einer Flüssigkeit, wie Wasser) in stetiger Abfolge oder in Intervallen zur Messeinrichtung.

Eventuelle Homogenisierung des emittierten Mediums im Trägermedium durch Wirbelbildung, erreichbar durch dessen tangentiale Einströmung sowie tangentiale oder zentrale Abströmung. Bezüglich der Drehrichtung ist vorzugsweise die natürliche Wirbelbildung auszunutzen.

Eventuelle Unterstützung der Wirbelbildung mittels Umwälzkreis (inklusive Umwälzpumpe).

Druckbeanspruchung der Prüflings entsprechend freier Atmosphäre durch eine Druckausgleichsöffnung zu dem Raum, der zur Kontaktierung mit durchdringungsfähigem Medium dient sowie einem Leck per Überströmöffnung in der Eingangsleitung des Trägermediums.

Vorzugsweise Selbstkompensation von Druckschwankungen in den Räumen auf Grund von Temperaturänderungen mittels Einstellung eines abströmenden Volumenstroms der gleich oder größer ist als eine Volumenzunahme durch Temperatursteigerung bzw. mittels Einstellung eines zuströmenden Volumenstroms, der gleich oder größer ist als eine Volumenverringerung durch Temperaturminderung.

Einstellung einer Kompression des untersuchungsrelevanten Flächenanteils des Prüflings auf pneumatischem Wege über Druckbeaufschlagung mindestens einer Seite des Prüflings.

Temperaturbeaufschlagung des Prüflings inklusive durchdringungsfähigem Medium sowie Trägermedium, vorzugsweise über eine Beheizung des gesamten Prüfkörpers in einer Heizkammer.

Zu untersuchende Versuchsobjekte sind in der Regel Originalteile, Attrappen oder normierte Bauteile. Diese Objekte können bedarfsweise bauartbedingt einen Innenraum besitzen, in den ein durchdringungsfähiges Medium eingeleitet wird. Erforderlich ist hierbei ein gegenüber dem zweiten Raum diffusionsdichter erster Raum, der emittierende Stoffe aufnimmt und deren Transport zu Messeinrichtungen, wie Volumenstrommessern, Stoffanalysatoren oder dergleichen, per neutralem Trägermedium erlaubt. Zur Abdichtung der Räume werden geeignete diffusionsdichte Dichtelemente verwendet (z.B. aus PTFE, FPM oder Fluorkautschuk, bedarfsweise auch durch Verlötung).
In Analogie zum Stand der Technik gemäß DE-C 41 27 435 können beim Erfindungsgegenstand in einem oder beiden Räumen variable Volumina der durchströmenden Medien eingestellt werden. Erforderlich dazu sind leicht bewegliche Raumhüllen (Wände oder Decken) bzw. der Anschluss eines Ausdehnungsballons. Aus dem Kammerraum können in Zeitintervallen (z.B. stündlich) Gasproben zu Analysezwecken entnommen werden. Um hier jedoch zu gewährleisten, dass die Probenentnahme weitere Messergebnisse nicht verfälscht, sollte das Entnahmevolumen 1 % des Raumvolumens nicht übersteigen.
Variable Volumina erübrigen sich jedoch, wenn der abströmende Volumenstrom größer ist als Volumenzunahmen durch Temperatursteigerung bzw. wenn der zuströmende Volumenstrom größer ist als Volumenverringerungen durch Temperaturminderung.

Gegenüber dem im Stand der Technik beschrieben SHED-Test weist der Erfindungsgegenstand noch folgende Vorteile auf:

Eine stetige Zufuhr eines durchdringungsfähigen Mediums gewährleistet bei Gemischen mit unterschiedlicher Durchgängigkeit deren andauernd gleiche Eigenschaften.

Stetige Messungen (Analysen) des Emissionen geben detaillierte und spontane Auskünfte über den jeweiligen Emissionsablauf (z.B. zeitweilige Phänomene, wie vereinzelte blasenartige Austritte oder auch das Eintreten eines stationären Zustandes).

Außerdem können Betriebsstörungen können deutlicher und schneller erkannt werden.

Eine stetige Spülung des ersten Raumes für das emittierende Medium durch ständig frisches Medium vermindert eine genauigkeitsschädliche Kondensatbildung auf Oberflächen.

Eine Aufheizung entweder der gesamten Kammer, der Räume oder des Prüflings von außen nach innen (interne Zusatzbeheizung ebenfalls denkbar) bzw. eine Abkühlung von innen nach außen verhindert kältere Oberflächen und vermindert damit genauigkeitsschädliche Kondensatbildungen.

Einfachere technische Ausstattung.

Der Erfmdungsgegenstand ist anhand eines Ausführungsbeispieles schematisch dargestellt und wird wie folgt beschrieben. Es zeigen:
- Figur 1: Schematische Darstellung der erfindungsgemäßen Vorrichtung zur Bestimmung stofflicher Emissionen eines Prüflings;
- Figur 2 und 3: Ausführungsbeispiele des in Figur 1 dargestellten Schemas;
- Figur 4: Diagramm des Emissionsverhaltens einer Dichtungsprobe bei Temperatursteigerung auf ein konstantes Niveau.

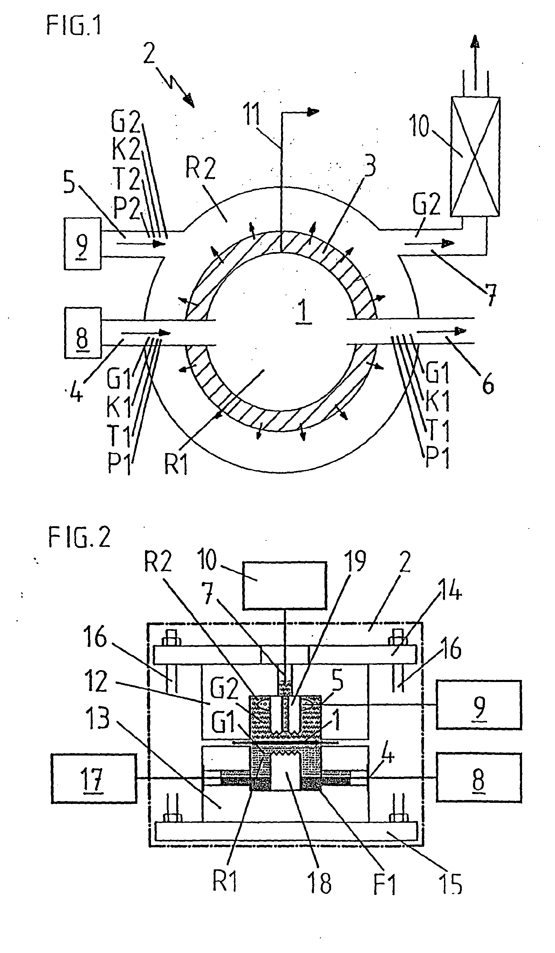

Figur 1 zeigt als schematische Darstellung eine Vorrichtung zur Bestimmung stofflicher Emissionen eines Prüflings 1. Der Prüfling 1 soll in diesem Fall gebildet werden durch eine kreisförmige Platte, die im Bereich einer Kammer 2 dergestalt eingebracht ist, dass zwei Räume R1, R2 gebildet werden. Der schraffierte Bereich 3 des Prüflings 1 bildet den sogenannten Einspannbereich, der die Räume R1 und R2 dichtend voneinander trennt. Jeder Raum R1, R2 ist mit einem separater Medieneinlassöffnung 4, 5 und einer separaten Medienauslassöffnung 6, 7 versehen. Die Bezugszeichen 8, 9 bilden hierbei Vorratsbehältnisse für die jeweils zuzuführenden Medien. Im Einspannbereich 3 sind nicht weiter dargestellte Dichtelemente vorgesehen, die bedarfsweise auch durch den Prüfling 1 selber gebildet sein können. Durch diese Maßgabe werden zwei gegeneinander abgedichtete Räume R1, R2 gebildet. Dem Raum R1 wird über die Einlassöffnung 4 ein durchdringungsfähiges, in diesem Beispiel gasförmiges Medium G1 zugeführt, das den Raum R1 ausfüllt und durch die Auslassöffnung 6 wieder abgeführt wird. Das Medium G1 kann bedarfsweise im Kreislauf gefördert werden. In diesem Beispiel soll der Raum R1 permanent von dem Medium G1 mit gleichbleibender Zusammensetzung K1 durchströmt werden.
Alternativ kann das Medium auch durch eine Flüssigkeit gebildet sein (beispielsweise Superbenzin), wobei der Prüfling 1 mittel- oder unmittelbar durch die Flüssigkeit bzw. den oberhalb eines Flüssigkeitspegels sich entwickelnden bzw. absetzenden Dampf in entsprechender Weise beaufschlagt wird. Das im Raum R1 befindliche Medium G1 mit der Zusammensetzung K1 kann den schraffierten Bereich 3 durchdringen. Dem Raum R2 wird ein neutrales, in diesem Beispiel ebenfalls gasförmiges Trägermedium G2, wie beispielsweise Stickstoff, mit einer vorgebbaren Zusammensetzung K2 über den Einlassbereich 5 zugeführt. Das Trägermedium G2, füllt den Raum R2 aus und wird über die Auslassöffnung 7 wieder abgezogen und einer Analysemesseinrichtung 10 zugeführt. Letztere kann durch einen Volumenstrommesser, einen Stoffanalysator oder dergleichen Messinstrument gebildet sein. Das neutrale Trägermedium G2 nimmt die aus dem schraffierten Bereich 3 austretenden stofflichen Emissionen (Eigenemissionen des Prüflings 1 und/oder stoffliche Emissionen des im Raum R1 vorhandenen Mediums) auf. Die ursprüngliche Zusammensetzung K2 des Trägermediums G2 wird verändert, wobei die Differenz gegenüber der ursprünglichen Zusammensetzung K2 im Bereich der Analysemesseinrichtung 10 bestimmt werden kann. Der nicht schraffierte Bereich des Prüflings 1 im Raum R1 bildet eine definierte Prüffläche.
Soll der Prüfling 1 beispielsweise eine Dichtung sein, kann selbige im schraffierten Bereich 3 eingebracht werden, wobei bedarfsweise auch eine Leckageprüfung von Dichtlippen oder dergleichen durchgeführt werden kann.
Je nach Prüfling 1 können in den Räumen R1, R2 - wie bereits angesprochenunterschiedlichste strömungsfähige Medien G1, G2 mit ebenfalls unterschiedlichsten Zusammensetzung K1, K2 und des weiteren unterschiedlichen Temperaturen T1, T2 sowie Drücken P1, P2 erzeugt werden. Bedarfsweise kann auch das Volumen im Raum R1 - wie in der DE-C 41 27 435 angesprochen - verändert werden, um auf diese Weise einen konstanten Druck am Prüfling 1 zu erzeugen. Im Bereich 11 kann aus dem Raum R1 in vorgebbaren Zeitintervallen eine Gasprobe zu Analysezwecken entnommen werden. Um zu gewährleisten, dass die Probenentnahme die Messungen nicht verfälscht, muss die zugeführte Volumenmenge der entzogenen Volumenmenge gleich oder größer sein.
Eine stetige Zufuhr des durchdringungsfähigen Mediums gewährleistet bei Gemischen mit unterschiedlicher Durchgängigkeit deren andauernd gleiche Eigenschaften. Stetige Analysen der Emissionen geben detaillierte und spontane Auskünfte über den Emissionsablauf. Bedarfsweise kann auch ein Temperieren der gesamten Kammer 2, der Räume R1,R2 oder nur des Prüflings mittel- oder unmittelbar (Aufheizen vorzugsweise von außen nach innen bzw. Abkühlen vorzugsweise von innen nach außen) vorgenommen werden, was in dieser Skizze nicht dargestellt ist.
Der Erfindungsgegenstand ist vielseitig einsetzbar und lässt konkrete Aussagen über umweltschädigende stoffliche Emissionen von einzelnen Bauteilen, wie beispielsweise Dichtungen, insbesondere Flachdichtungen, wie Zylinderkopfdichtungen oder dergleichen, zu. Durch gezielte Veränderung der bei den Werkstoffen für derartige Dichtungen eingesetzten Materialien kann somit eine Minimierung von Emissionswerten, insbesondere von Kohlenwasserstoffen, herbeigeführt werden.

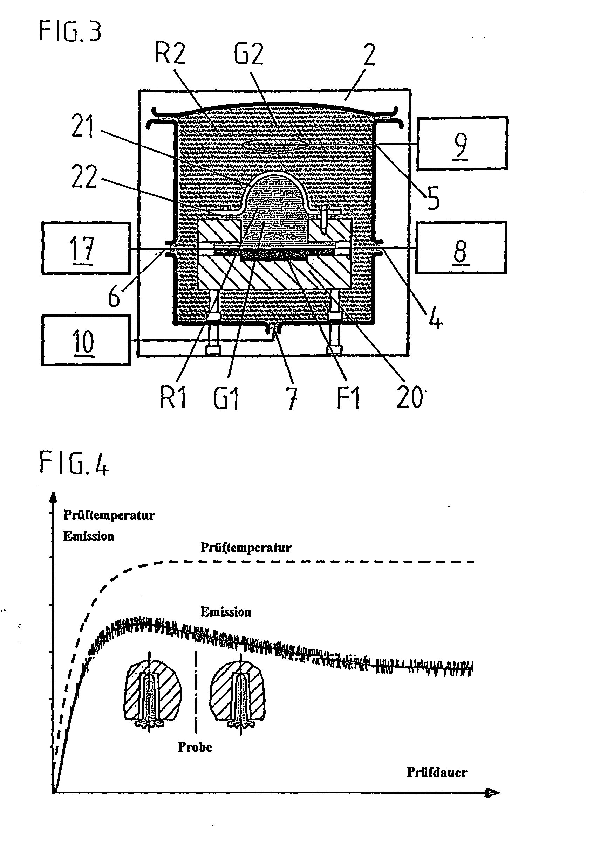

Die Figuren 2 und 3 zeigen Ausführungsbeispiele des in Figur 1 dargestellten Schemas. Gleiche Bauteile sind mit gleichen Bezugszeichen versehen.

Figur 2 zeigt eine Kammer 2, in welcher ein Prüfung 1, in diesem Beispiel eine Probenplatte, eingebracht ist. Der Prüfling 1 wird zwischen einem oberen Flansch 12 und einem unteren Flansch 13 über eine obere Jochplatte 14 und eine untere Jochplatte 15 gehalten und über Gewindeschrauben 16 verspannt. Bedarfsweise können - müssen jedoch nicht - weitere Dichtelemente im Bereich der Flansche 12,13 vorgesehen werden, damit eine gute Abdichtung gewährleistet ist. Durch den Prüfling 1 werden im Bereich der Kammer 2 zwei Räume R1, R2 gebildet, die gegeneinander abgedichtet sind. In den Raum R1 wird über eine durch ein Vorratsbehältnis 8 gebildete Dosiereinrichtung ein durchdringungsfähiges Medium in den Raum R1, über eine Medieneinlassöffnung 4 eingebracht. Das durchdringungsfähige Medium soll in diesem Beispiel eine Flüssigkeit F1 eingebracht, wie beispielsweise Super-Benzin. Der flüssige Anteil des Mediums F1 sammelt sich im unteren Bereich des Raumes R1 (Flüssigkeitssumpf), während sich daraus absetzendes gasförmiges Medium G1 im sogenannten Verdampfungsraum sammelt. Das Medium G1 ist nun in der Lage den Prüfling 1 zu durchdringen. Mit dem Bezugszeichen 17 ist eine Auffangeinrichtung für durchdringungsfähiges Medium gemeint. Das Bezugszeichen 9 betrifft eine als Vorratsbehältnis ausgebildete Dosiereinrichtung für ein Trägermedium, in diesem Beispiel Helium, das über eine Medieneinlassöffnung 5 in den Raum R2 eingebracht wird. Sowohl das Medium F1, G1 als auch das Medium G2 weisen eine Zusammensetzung K1, K2, einen Druck P1, P2 sowie eine Temperatur T1, T2 auf. Damit mögliche Ausbeulungen des Prüflings 1 in vertretbarem Umfang bleiben, sind obere und untere Anschlagelemente 18,19 in den Räumen R1, R2 eingebaut. Über die Medienauslassöffnung 7 wird das nun eine andersartige Zusammensetzung aufweisende Trägermedium G2 einer Analysemesseinrichtung 10 zugeführt.

Figur 3 zeigt ein weiteres Ausführungsbeispiel. Auch hier ist eine Kammer 2 vorgesehen. Dargestellt ist ein Versuchsunterteil 20, sowie ein Versuchsoberteil 21. Die Bauteile sind in diesem Beispiel durch eine Dichtung 22 voneinander getrennt. Auch hier wird ein Raum R1 sowie ein Raum R2 innerhalb der Kammer 2 gebildet. Gemessen werden soll in diesem Beispiel die Durchdringungsfähigkeit der Dichtung 22. Über die Medieneinlassöffnung 4 wird aus der Dosiereinrichtung 8 durchdringungsfähiges Medium in den Raum R1 eingebracht. Selbiges kann in Analogie zur Figur 2 auch Super-Benzin sein, das eine flüssige Phase F1 sowie eine gasförmige Phase G1 beinhaltet. Über die Medienauslassöffnung 6 wird das durchdringungsfähige Medium einer Auffangeinrichtung 17 zugeführt. Im Raum R2 wird über die Dosiereinrichtung 9 ein Trägermedium G2, in diesem Beispiel Stickstoff, über die Medieneinlassöffnung 5 zugeführt. Das Bezugszeichen 7 definiert die Medienauslassöffnung für das Trägermedium G2, über welche dass nun eine andere Zusammensetzung aufweisende neutrale Trägermedium G2 der Analysemesseinrichtung 10 zugeführt wird.

Figur 4 zeigt ein Diagramm, bei welchem die spezifische Emission (mg/h/m) anhand einer Dichtungsprobe in einer Aufnahmenut über der Zeit (h) aufgetragen ist. Eine Abhängigkeit des Emissionsverhaltens von der Temperaturbelastung und der Zeit ist zu erkennen.
Anstelle des in diesen Beispielen erwähnten Mediums G1 (gasförmig) kann auch ein flüssiges Medium F1 zum Einsatz gelangen, das dann ebenfalls eine Zusammensetzung K1, eine Temperatur T1 sowie einen Druck P1 aufweist.
Gleiches gilt für das Trägermedium, das bedarfsweise auch eine neutrale Flüssigkeit F2, wie z.B. Wasser, mit einer Zusammensetzung K2, einer Temperatur T2 sowie einem Druck P2 beinhalten kann.
Der Fachmann wird in Abhängigkeit vom zu untersuchenden Gegenstand die geeigneten Medien mit den ihnen zugeordneten Parametern auswählen.

## Patentansprüche

1. Verfahren zur Bestimmung stofflicher Emissionen mindestens eines in einer Kammer (2) angeordneten Prüflings (1), dessen emittierende Stoffe bestimmt werden, **dadurch gekennzeichnet, dass** der Prüfling (1) dergestalt in der Kammer (2) positioniert wird, dass zwei gegeneinander abgedichtete Räume (R1, R2) mit separaten Medieneinlass- (4, 5) und auslassöffnungen (6,7) gebildet werden, dass der erste Raum (R1) von einem durchdringungsfähigen Medium beaufschlagt wird (G1, F1), dessen Zusammensetzung (K1), Druck (P1) sowie (T1) definiert einstellbar ist, dass der zweite Raum (R2) von einem neutralen Trägermedium (G2, F2) mit einer definiert einstellbaren Zusammensetzung (K2), einem Druck (P2) sowie einer Temperatur (T2) beaufschlagt wird, und dass das Trägermedium inklusive emittierender Stoffe, die aus Eigensubstanzen des Prüflings resultieren bzw. aus dem durchdringungfähigen Medium, einer Analysemesseinrichtung zugeführt wird.

2. Verfahren nach Anspruch 1, **dadurch gekennzeichnet, dass** der erste Raum (R1) permanent von einem Medium (G1, F1) mit im wesentlichen gleichbleibender Zusammensetzung (K1), gleichbleibender Temperatur (T1) sowie gleichbleibendem Druck (P1), beaufschlagt wird.

3. Verfahren nach Anspruch 1 oder 2, **dadurch gekennzeichnet, dass** der zweite Raum (R2) permanent von einem Trägermedium (G2, F2) mit im wesentlichen gleichbleibender Zusammensetzung (K2), gleichbleibender Temperatur (T2) sowie gleichbleibendem Druck (P2), beaufschlagt wird.

4. Verfahren nach einem der Ansprüche 1 bis 3, **dadurch gekennzeichnet, dass** die Bestimmung der im Trägermedium (G2, F2) enthaltenden emittierten Stoffe des Prüflings (1) bzw. des Mediums (G1, F1) kontinuierlich erfolgt.

5. Verfahren nach einem der Ansprüche 1 bis 4, **dadurch gekennzeichnet, dass** der jeweilige Prüfling (1) zur Reduzierung von Randeinflüssen in einer Einspannzone mit durch die Einspannung bedingten Dichtegradienten partiell mit einer Sperrbeschichtung oder einer aufgeklebten permeationsdichten Sperrschicht versehen wird.

6. Verfahren nach einem der Ansprüche 1 bis 5, **dadurch gekennzeichnet, dass** zur Begrenzung einer Ausbeulung plattenartig ausgebildeter Prüflinge (1) durch Temperatur- und/oder Druck- und/oder Quelleffekte in einem der Räume (R1 oder R2) oder in beiden (R1 und R2) Anschlagelemente (18, 19) vorgesehen werden.

7. Verfahren nach einem der Ansprüche 1 bis 6, **dadurch gekennzeichnet, dass** der Prüfling (1) im ersten Raum (R1) mit einem konstanten Ausgangsvolumen eines gasförmigen durchdringungsfähigen Mediums (G1) in Wirkverbindung gebracht wird.

8. Verfahren nach einem der Ansprüche 1 bis 6, **dadurch gekennzeichnet, dass** der Prüfling (1) im ersten Raum (R1) mit einem konstanten Ausgangsvolumen eines flüssigen durchdringungsfähigen Mediums (F1) bei Einstellung eines vorgebbaren Flüssigkeitspegels im Raum (R1) in Wirkverbindung gebracht wird.

9. Verfahren nach einem der Ansprüche 1 bis 6, **dadurch gekennzeichnet, dass** der Prüfling (1) im ersten Raum (R1) über eine stetige dosierte Zufuhr eines gasförmigen durchdringungsfähigen Mediums (G1) in Verbindung mit einer stetigen Abfuhr des Mediums (G1) beaufschlagt, insbesondere durchströmt, wird.

10. Verfahren nach einem der Ansprüche 1 bis 6, **dadurch gekennzeichnet, dass** der Prüfling (1) im ersten Raum (R1) über eine stetige dosierte Zufuhr eines flüssigen durchdringungsfähigen Mediums (F1), bei Einstellung eines definierten Flüssigkeitspegels im Raum (R1) dergestalt beaufschlagt wird, dass der Prüfling (1) mit dem flüssigen Medium (F1) oder mit dessen Dampf (G1) oberhalb des Flüssigkeitspegels unmittelbar kontaktiert wird, wobei das flüssige Medium (F1) stetig abgeführt wird.

11. Verfahren nach einem der Ansprüche 1 bis 10, **dadurch gekennzeichnet, dass** als neutrales Trägermedium (G2) Stickstoff, Helium, Wasser oder dergleichen eingesetzt wird.

12. Verfahren nach einem der Ansprüche 1 bis 11, **dadurch gekennzeichnet, dass** der emittierte Stoff im Trägermedium (G2) vor Eintritt in die Analysemesseinrichtung (10) durch Verwirbelung homogenisiert wird.

13. Verfahren nach einem der Ansprüche 1 bis 12, **dadurch gekennzeichnet, dass** der Prüfling (1) im Bereich mindestens eines Raumes (R1, R2) einem vorgebbaren Druck (P1, P2) ausgesetzt wird.

14. Verfahren nach einem der Ansprüche 1 bis 13, **dadurch gekennzeichnet, dass** der Prüfling (1) und/oder das Medium (G1, F1) und/oder das Trägermedium (G2, F2) im Bereich mindestens eines Raumes (R1, R2) einer vorgebbaren Temperatur (T1, T2) ausgesetzt wird.

15. Verfahren nach einem der Ansprüche 1 bis 14, **dadurch gekennzeichnet, dass** im ersten Raum (R1), im Zusammenhang mit der Einstellung eines konstanten Druckes auf den Prüfling (1) eine variable Volumenabströmung des jeweiligen Mediums (G1, F1) erzeugt wird.

16. Verfahren nach einem der Ansprüche 1 bis 15, **dadurch gekennzeichnet, dass** die Zusammensetzung (K1, K2) des Mediums (G1, F1) und/oder des Trägermediums (G2, F2) in vorgebbaren Zeitintervallen überprüft wird.

17. Vorrichtung zur Bestimmung stofflicher Emissionen mindestens eines in einer Kammer (2) angeordneten Prüflings (1), wobei die Kammer (2) über eine Einlass-(4, 5) und eine Auslassöffnung (6, 7) von einem Medium beaufschlagbar ist und emittierte Stoffe des Prüflings (1) zu deren Bestimmung einer Analysemesseinrichtung (10) zuführbar sind, **dadurch gekennzeichnet, dass** der Prüfling (1) dergestalt in der Kammer (2) angeordnet ist, dass zwei gegeneinander abgedichtete Räume (R1, R2) entstehen, die jeweils separate Medieneinlass- (4, 5) und auslassöffnungen (6, 7) aufweisen, dass der erste Raum (R1) von einem durchdringungsfähigen Medium (G1, F1) mit einer Zusammensetzung (K1), einem Druck (P1) sowie einer Temperatur (T1) beaufschlagbar ist, dass der zweite Raum (R2) von einem neutralen Trägermedium (G2, F2) mit einer Zusammensetzung (K2), einem Druck (P2) sowie einer Temperatur (T2) beaufschlagbar ist, und dass das Trägermedium inklusive emittierender Stoffe aus der Eigensubstanz des Prüflings (1) bzw. aus dem durchdringungfähigen Medium (G1, F1), der Analysemesseinrichtung (10) zuführbar ist.

18. Vorrichtung nach Anspruch 17, **dadurch gekennzeichnet, dass** mindestens einer der Räume (R1, R2) kontinuierlich vom jeweiligen Medium (G1, F1, G2, F2) beaufschlagbar, insbesondere durchströmbar, ist.

19. Vorrichtung nach Anspruch 17 oder 18, **dadurch gekennzeichnet, dass** die Analysemesseinrichtung (10) vom Trägermedium (G2, F2) kontinuierlich beaufschlagbar, insbesondere durchströmbar, ist.

20. Vorrichtung nach einem der Ansprüche 17 bis 19, **dadurch gekennzeichnet, dass** der Prüfling (1) plattenförmig ausgebildet ist und unter Bildung einer definierten Prüffläche zwischen flanschartig ausgebildeten Spannelementen (12, 13) positionierbar ist.

21. Vorrichtung nach einem der Ansprüche 17 bis 19, **dadurch gekennzeichnet, dass** der Prüfling (1) eine insbesondere ringförmig ausgebildete Dichtung ist, die unter Bildung eines Dichtbereiches zwischen flanschartig ausgebildeten Spannelementen (12, 13) positionierbar ist.

22. Vorrichtung nach einem der Ansprüche 17 bis 19, **dadurch gekennzeichnet, dass** der Prüfling (1) einen Innenraum aufweist und über diffusionsdichte Dichtelemente (22), insbesondere Polytetrafluorethylen, Fluorpolymer, bzw. durch Verlöten oder dergleichen, innerhalb der Kammer (2) angeordnet ist.

23. Vorrichtung nach einem der Ansprüche 17 bis 22, **dadurch gekennzeichnet, dass** zur Einstellung einheitlicher Drücke im Bereich des Prüflings (1) eine variable Volumenzuströmung des jeweiligen Mediums (G1, F1) zumindest im Bereich des zweiten Raumes (R2) erzeugbar ist.

24. Vorrichtung nach einem der Ansprüche 17 bis 23, **dadurch gekennzeichnet, dass** in einem oder beiden Räumen (R1, R2) leicht bewegliche Raumhüllen, wie Wände oder Decken, vorgesehen sind.

25. Vorrichtung nach einem der Ansprüche 17 bis 23, **dadurch gekennzeichnet, dass** in einem oder beiden Räumen (R1, R2) ein Ausdehnungsballon angeordnet ist.

26. Vorrichtung nach einem der Ansprüche 17 bis 25, **dadurch gekennzeichnet, dass** das Trägermedium (G2) ein Gas, insbesondere Stickstoff oder Helium, bzw. eine Flüssigkeit, insbesondere Wasser, ist.

27. Vorrichtung nach einem der Ansprüche 17 bis 26, **dadurch gekennzeichnet, dass** die Messeinrichtung (10) durch Volumenstrommesser, Stoffanalysatoren oder dergleichen gebildet ist.

28. Vorrichtung nach einem der Ansprüche 17 bis 27, **dadurch gekennzeichnet, dass** der Prüfling (1) mittel- oder unmittelbar beheizbar ist.

29. Vorrichtung nach einem der Ansprüche 17 bis 28, **dadurch gekennzeichnet, dass** die gesamte Kammer (2), die Räume (R1, R2) oder der Prüfling (1), insbesondere von innen nach außen, klimatisierbar ist. vorzugsweise von außen nach innen aufheizbar bzw. von innen nach außen kühlbar.

30. Vorrichtung nach einem der Ansprüche 17 bis 29, **dadurch gekennzeichnet, dass** die Zusammensetzung (K1) des Mediums (G1, F1) im Bereich des ersten Raumes (R1) durch eine nachgeordnete Analyseeinrichtung (11) überprüfbar ist.
